Europäisches Patentamt

European Patent Office

Office européen des brevets

(19)

(11) Publication number: **0 271 097 B1**

# EUROPEAN PATENT SPECIFICATION

(12)

(45) Date of publication of patent specification: **29.09.93**  (51) Int. Cl.⁵: **B32B 27/08**, C09D 129/04, C09D 131/04, B65D 65/40

(21) Application number: **87118311.7**

(22) Date of filing: **10.12.87**

(54) **Laminated structures.**

(30) Priority: **12.12.86 JP 297090/86**

(43) Date of publication of application:
**15.06.88 Bulletin 88/24**

(45) Publication of the grant of the patent:
**29.09.93 Bulletin 93/39**

(84) Designated Contracting States:
**BE DE FR GB IT NL SE**

(56) References cited:
**EP-A- 0 132 565**
**GB-A- 2 150 934**
**US-A- 4 459 400**

(73) Proprietor: **KURARAY CO., LTD.**
**1621 Sakazu**
**Kurashiki-City Okayama Prefecture 710(JP)**

(72) Inventor: **Shimo, Hiroyuki**
**1625, Sakazu**
**Kurashiki-City(JP)**
Inventor: **Kanesige, Isao**
**492.2, Hiyoshi**
**Kurashiki-City(JP)**
Inventor: **Tanaka, Nobuo**
**11-23, Shishigaguchi-Cho**
**Nishinomiya-City(JP)**

(74) Representative: **VOSSIUS & PARTNER**
**Postfach 86 07 67**
**D-81634 München (DE)**

EP 0 271 097 B1

## Description

This invention relates to a laminated structure comprising a base layer made of a resin selected from a polyvinyl chloride resin, polystyrene resin, polyacrylic resin, polycarbonate resin and polyamide resin, particularly a polyvinyl chloride resin, having provided at least on one surface thereof a layer of a blend of a polyesteramide having a Tg ( glass transition point ) of not higher than 50°C and a saponified product of an ethylene-vinyl acetate copolymer ( hereinafter referred to as EVOH ).

Polyvinyl chloride is a resin having markedly well-balanced characteristics among general-purpose resins. It has been applied to a wide variety of end-uses. However, polyvinyl chloride alone can not satisfy all the requirements. For instance, when used for a container for foods or non-foods, high gas barrier properties are required in the field where the contents should be free of oxidization or should maintain their flavor. Further wallpaper, artificial leather, etc. made of plasticized polyvinyl chloride have a drawback of being easily soiled and difficult to be de-soiled. It is known that for the purpose of overcoming the above-mentioned drawback an EVOH layer is provided on the outer surface of polyvinyl chloride to give high gas barrier property, anti-bleeding property and resistance to oil.

Methods are known to form an EVOH layer on the outer surface of polyvinyl chloride, such as laminating an EVOH film onto polyvinyl chloride ( Japanese Utility Model Laid Open 172927/1984 ), applying an EVOH solution onto polyvinyl chloride and drying off the solvent to form an EVOH coating layer ( JPA 124661/1985 ). The solution coating method is remarkable since it can form a relatively thin coating, can easily be used on a base material of complicated shape, such as hollow containers, and requires only a relatively simple equipment.

When using the above-mentioned solution coating method to laminate an EVOH layer onto a polyvinyl chloride layer, unless an adhesive layer is provided as intermediate layer in between, both do not bond at all with each other. As an adhesive to be used for this purpose, in most cases polyurethane adhesives are used. Generally, onto base material of polyvinyl chloride the polyurethane adhesive is first applied and then dried, followed by application and drying of an EVOH solution to give a laminated structure of EVOH and polyvinyl chloride. However, the process of applying and drying separately an adhesive solution and EVOH solution makes the equipment complicated and moreover is economically unfavorable.

Thereupon, employment of a solution containing EVOH having mixed therewith an adhesive appears to be very useful in simplifying the application-drying process and also making unnecessary the solvent of an adhesive solution. As a method for this, JPA 30600/1970 proposed incorporation of polyethyleneimine into EVOH solution. However, this method practically does not, though firmly bonding polyolefin-related polymers, bond polyvinyl chloride.

Also, JPA 239233/1985 discloses a method comprising employment, as an inter-layer adhesive for polyvinyl chloride and EVOH, of a blend of a copolymer of vinyl chloride and vinyl acetate or acrylic acid ester with reactive polyurethane polymer. This method has the drawback that it requires the application of the adhesive to the EVOH layer, and, if desired, drying.

Further U.S.P. 4,459,400 ( JPA 144330/1985 ) and U.S.P. 4,481,238 ( JPA 501312/1985 ) disclose the use of polyesteramide as an inter-layer adhesive for an EVOH layer and a PET layer. However, they do not disclose any of the following facts:

polyesteramide has a good adhesiveness to polyvinyl chloride resin, polystyrene resin, polyacrylic resin, polycarbonate or polyamide resin,

a layer of a blend of EVOH and polyesteramide is laminated with a polyvinyl chloride layer, and

thereby a laminated structure having an excellent peeling strength is obtained.

An object of the present invention is to provide, while eliminating the process of applying and drying an adhesive, a laminated structure in which one of the afore-mentioned resins such as polyvinyl chloride bonds firmly with EVOH.

The above object is achieved by providing a laminated structure comprising a base layer of one of the afore-mentioned resins such as polyvinyl chloride having provided at least on one surface thereof a layer of a blend of a polyesteramide having a Tg ( glass transition point ) of not higher than 50°C with a saponified product of an ethylene-vinyl acetate copolymer in a weight ratio of from 5 : 95 to 35 : 65 ( polyesteramide : EVOH ).

Further, in the case where polyvinyl chloride is employed as a base material in this invention, there can be obtained a polyvinyl chloride laminated structure which has excellent gas barrier properties, prevents plasticizers from bleeding and further prevents soiling.

The polyesteramide used in this invention should have a Tg ( glass transition point ) of not higher than 50°C, preferably not higher than 40°C, most preferably not higher than 30°C. When the Tg is higher than 50°C, not only the compatibility of the polyesteramide with EVOH decreases, but also adhesion strength

EP 0 271 097 B1

with polyvinyl chloride and EVOH decreases.

The polyesteramide as defined in this invention is a polymer composed of the reaction product of a diamine component, a diol component and a dicarboxylic acid component, and contains in the polymer chain repeating ester units and repeating amide units. The diamine component is normally composed of at least one kind of a diamine having 2 to about 14 carbon atoms, and preferably an aliphatic diamine , but an aromatic diamine may be added thereto within a limit not to deviate from the intention of the present invention. Examples of suitable diamines include hexamethylenediamine, piperazine, 1-aminoethylpiperazine, bisaminopropylpiperazine, 1,3-di-piperazylpropane, 1,2-ethanediamine, mixtures thereof, etc. The diol component as used in this invention is normally composed of at least one diol having 2 to about 24 carbon atoms, preferably an aliphatic glycol having 2 to 12 carbon atoms. Examples of suitable diols include ethylene glycol, 1,4-butanediol, neopentyl glycol, 1,6-hexanediol, 1,4-cyclohexanedimethanol, or mixtures thereof, etc.

The polyesteramide further contains a dicarboxylic acid component. The dicarboxylic acid component is normally composed of at least one dicarboxylic acid having about 5 to about 14 carbon atoms, and is preferably an aliphatic dicarboxylic acid, but an aromatic dicarboxylic acid may be added within a limit not to deviate from the intention of the present invention. Examples of suitable dicarboxylic acids include sebacic acid, azelaic acid, adipic acid, mixtures thereof, etc.

The polyesteramide of this invention can be synthesized in a known manner for producing polyesteramides.

Generally, it is produced by a conventional melt-phase polymerization technique from the diamine component, diol component and dicarboxylic acid component in the presence of a catalyst ( preferably titanium compound ). Such a method is disclosed, for instance, in JPA 144330/1985, 501312/1986, etc. The polyesteramide used in this invention is a resin comprising in its polymer chain an ester component and an amide component generally in a molar ratio of 5 : 95 to 40 : 60, preferably 10 : 90 to 30 : 70. When the ester component is less than 5 mol%, the strength of adhesion to polyvinyl chloride may decrease, and when the ester component is more than 40 mol% the compatibility with EVOH may decrease.

The EVOH used in this invention has an ethylene content of 20 to 60 mol%, preferably 25 to 55 mol%, and a saponification degree of vinyl acetate component of 90 % or more, preferably 95 % or more. When the ethylene content is lower than 20 mol%, the gas barrier properties at high humidities decrease or the water resistance decreases. An ethylene content of 60 mol% or higher can not give sufficient gas barrier properties or cause a decrease in the capacity of preventing bleeding or plasticizer. And when the saponification degree is less than 90 % the gas barrier properties and the resistance to moisture decrease.

The EVOH may contain a comonomer unit such as small amount of an $\alpha$-olefin such as propylene, isobutene, $\alpha$-octene, etc., an unsaturated carboxylic acid or its salt, a partially alkylated ester, alkyl ester, nitrile and anhydride thereof, an unsaturated sulfonic acid or salt thereof, etc.

As regards the incorporation ratios of the polyesteramide and the EVOH, when the incorporation ratio of the polyesteramide is low the adhesion to polyvinyl chloride becomes low and a satisfactory composite structure can not be obtained. Too high an incorporation ratio of the polyesteramide will cause a decrease in gas barrier properties. Therefore, the polyesteramide should be incorporated, to the total weight of the polyesteramide and the EVOH, 5 to 35 % by weight, preferably 10 to 30 % by weight.

As the method for providing a layer of the blend of the polyesteramide and the EVOH on at least one surface of a base material, a method comprising dissolving the polyesteramide and the EVOH in a common solvent and applying the solution to the base material is most effective. Here, as the common solvent, there are employed monohydric alcohols such as methyl alcohol, ethyl alcohol, propyl alcohol, butyl alcohol, etc., dihydric alcohols such as ethylene glycol, propylene glycol, etc., trihydric alcohols such as glycerine, phenols such as phenol and cresol, amines such as ethylene diamine and trimethylene diamine, acids such as formic acid, dimethyl sulfoxide, dimethyl acetamide, N-methyl pyrolidone, etc., or mixtures thereof with water, etc. alone or in combination of more than two. Especially preferred solvents are mixed solvents of water-alcohol, for example, water-normal propyl alcohol, water-isopropyl alcohol, water-methyl alcohol, etc.

Concerning the concentration of the solution of a mixture of the polyesteramide and the EVOH, any concentration may work for application but usually a concentration of about 2 to about 20 % by weight is preferred.

Any known methods are applicable for applying the solution of a mixture of the polyesteramide and the EVOH, including roller coating method, spray coating method, dipping coating method, etc. The polyvinyl chloride base material may be coated on one, two or all surfaces thereof.

After applying the mixture solution, drying is performed at a temperature of 30 to 200 °C, preferably 50 to 150 °C, for about 10 seconds to about 10 minutes. The drying of the coating film may be carried out until almost no volatile matter remains in the coating film, but for preventing formation of cracking in the film and

3

maintaining for a long period the transparency and interlayer bonding strength of the film, it is advantageous to control the drying to a point where volatile matter remains in the film in an amount of 0.5 to 5 % by weight.

The thickness ( after volatiling off the solvent ) of a layer of the mixture of the polyesteramide and the EVOH applied on the polyvinyl chloride base material is in practice about 0.5 to about 20μ (μm). When the thickness is less than 0.5μ (μm), the film will not have sufficient gas barrier properties or be able to sufficiently prevent plasticizers from bleeding. On the other hand, when the thickness is more than 20μ (μm), complex operation such as increasing the number of applications is required to obtain a film of the required thickness, thus seriously reducing productivity.

The composite structure can also be formed by the hot pressing method or coextrusion method, instead of the solution coating method,. For instance, the composite structure can be formed by hot pressing a melt-blend film of EVOH and polyesteramide and polyvinyl chloride film, or by coextruding a blend of EVOH and polyesteramide with polyvinyl chloride.

The polyvinyl chlorides used in this invention include polyvinyl chloride and copolymers with a monomer copolymerizable with vinyl chloride such as vinyl acetate, acrylic acid ester, etc., and the polyvinyl chloride base material means any one of film, sheet, hollow bottle, tube, etc.

In the present invention, an excellent effect is obtained when a blend of EVOH and polyesteramide is laminated onto a film or sheet made of a plasticized polyvinyl chloride containing a plasticizer, on which explanation is given hereinbelow.

Most of the polyvinyl chlorides contain plasticizers and the content is usually in the range from 25 to 55 % of the total weight. Plasticizers being liquid at room temperatures include phthalate-related plasticizers such as dibutyl phthalate, di-2-ethylhexyl phthalate, diiso-octyl phthalate, diisodecyl phthalate, didecyl phthalate, di-nonyl phthalate, dilauryl phthalate, butyllaurul phthalate, butylbenzyl phthalate, etc., phosphates such as tricresyl phosphate, tributyl phosphate, tri-2-ethylhexyl phosphate, etc., chlorine-containing plasticizers such as chlorinated paraffine, etc., and plasticizers being solid at room temperature include phthalate-related plasticizers such as dicyclohexyl phthalate, and phthalic acid diesters having not less than 13 carbon atoms in the alcohol component thereof, multivalent alcohols such as aliphatic ester of dipentaerithritol, trimellitic acid-related plasticizers such as trioctyl trimellitate, etc. The EVOH having an ethylene content of 60 % or below and a saponification degree of 90 % or more, preferably 95 % or more, shows resistance to the plasticizers, and resistance to migration and bleeding of the plasticizers. Of the plasticizer types listed above, the former ( plasticizers being liquid at 20°C) is the one having marked migration-bleeding characteristics, but the EVOH can prevent the marked migration-bleeding of the plasticizers of this type. Particularly the EVOH having an ethylene content of 55 mol% or below, preferably 50 mol% or below and not less than 25 mol% has exceedingly satisfactory characteristics in the above prevention function and allows practically no plasticizer permeation.

As the ethylene content increases, the resistance to plasticizer permeation decreases gradually. When the content gets into a range of 60 mol% or more, in the case where EVOH has been laminated onto a polyvinyl chloride sheet or film, the bleeding of a plasticizer towards the surface becomes gradually noticeable and also the resistance to staining decreases. On the other hand, as the ethylene content decreases, the resistance to plasticizer permeation further increases. However, when the ethylene content is less than 20 mol%, the water resistance is low.
This is not preferred because the wiped surface will swell, or be damaged, when the surface is wiped with a wet wiper.

The laminate of this invention in which a blend of the EVOH and the polyesteramide is laminated with a plasticized polyvinyl chloride (film, sheet, etc.) may be used for wall paper, desk mats, portfolios, polyvinyl chloride leather, films for agricultural use, etc.

In addition to the above uses, the laminate of this invention can also be used for packaging material or containers, for foods, beverages, chemicals, medicines, and so on. Further, after laminating or coating a blend of the EVOH and the polyesteramide onto a polyvinyl chloride base material, the obtained laminate may be formed by drawing and/or heat treatment, etc. into a desired formed product.

Further as occasion demands, a moisture-proof layer can be formed with a polyvinylidene chloride coat, vinyl chloride-vinyl acetate copolymer coat, etc. onto the EVOH-polyesteramide layer of the composite structure

According to the present invention, there can be provided a firmly bonded laminated structure also when the blend of EVOH and polyesteramide is laminated onto a base material of, besides polyvinyl chloride, polystyrene resin, polyacrylic resin, polycarbonate resin and polyamide resin.

While polystyrene resin, polyacrylic resin, polycarbonate resin and polyamide resin are superior in formability, they do not have sufficient gas barrier properties or resistance to oil. The drawbacks are minimized by laminating on such resin a blend of EVOH and polyesteramide, and the laminate will become useful as food packaging materials (materials such as containers, cups, film, etc. )

Regarding methods for laminating the blend of EVOH and polyesteramide onto a base matrial of such resins, the same methods as described before for polyvinyl chloride resin are applicable, but for polystyrene resin it is preferred that the base material be subjected to corona discharge treatment prior to lamination.

Examples of polystyrene resins as used herein include polystyrene and copolymers ( such as styrene-acrylonitrile copolymers, styrene-p-divinylbenzene copolymers, styrene-butadiene copolymers, styrene-butadiene-acrylonitrile copolymers, etc. ) from styrene and a monomer copolymerizable therewith such as acrylonitrile and butadiene. Among them preferred are known rubbery polystyrenes which can be prepared by conducting polymerization of styrene in the presence of butadiene-styrene rubber; acrylonitrile-butadiene-styrene resins known as ABS resins by those skilled in the art; styrene-butadiene block copolymers having a high styrene component, which are known as transparent, shock-resistant polystyrenes, and so on.

Examples of polyacrylic resins are poly(acrylic acid ester) such as polymethylacrylate and polyethylacrylate, poly(methacryl acid ester) such as polymethylmethacrylate ( PMMA ), polyacrylonitrile, and so on, among which polymethylmethacrylate is preferred.

The polycarbonate resins as used in this invention are polymers in which diol components are bonded with each other via carbonate groups. As the diol component, there are used 4,4′-dihydroxydiphenyl-1,1′-ethane, 4,4′-dihydroxydiphenyl-2,2′-propane, 4,4′-dihydroxydiphenylsulphone, and the like. These are obtained by known methods such as subjecting a carbonate such as diphenylcarbonate to transesterification reaction in the presence or in the absence of a catalyst followed by evacuation or reacting a carbonate with phosgene in the presence of an acid binder.

Examples of the polyamides used in the invention are 6-nylon, 66-nylon, 6,10-nylon, 11-nylon or the derivatives thereof.

The invention will be explained in more detail by the Examples and Comparative Examples below. In the Examples, % and parts mean those by weight unless otherwise indicated. Glass transition points (Tg) were measured by using a Perkin-Elmer-DSC-2 Differential Scanning Calorimeter.

EXAMPLES

Examples 1 through 4

Ten parts of a blend of a polyesteramide consisting of azelaic acid/cyclohexane dimethanol/piperazine in a molar ratio of 0.50/0.09/0.41 and in an ester component/amide component ratio of 18/82 ( Tg: 20.5°C ) with an EVOH containing 32 mol% of ethylene and having a saponification degree of 99.5 % in a blending ratio by weight of 5 : 95, 10 : 90, 15 : 85, 20 : 80 each was added to 90 parts of a mixed solvent of water 35 % and n-propyl alcohol 65 %, and the mixture was stirred for about 2 hours at a temperature of 70 to 80°C to give four kinds of transparent solutions. These solutions were cooled to 25°C, and thereafter each applied onto a polyvinyl chloride film of 80 μ (μm) thickness containing 33 parts of dioctyl phthalate ( DOP ) as a plasticizer by the applicator coating method, followed by drying at 70°C for 10 minutes to form an EVOH coating film ( film thickness: 5μ (μm) ) containing about 3 % of volatile matter.

Various properties of the thus obtained composite structures are shown in Table 1.

Table 1

| | Blending Ratio of Polyesteramide ( wt% ) | Haze Degree 1) ( % ) | Oxygen Permeability 2) ( EVOH Coating Layer ) | T-Peel Strength 3) ( g/15 mm width ( x 10 m-N/15 mm width )) | Migration of Plasticizer 4) ( g/m$^2$ ( N/-m$^2$ ) |
|---|---|---|---|---|---|
| Example 1 | 5 | 6.3 | 2.8 | 20 (20) | 0 |
| Example 2 | 10 | 6.3 | 3.2 | 80 (78) | 0 |
| Example 3 | 15 | 7.2 | 3.8 | 330 (324) | 0 |
| Example 4 | 20 | 8.2 | 4.2 | 550 (540) | 0 |
| Comparative Example 1 | 2 | 5.6 | 2.4 | 5 (5) | -- |
| Comparative Example 1 | 40 | 19.9 | 23.0 | not peelable | -- |

Notes:

1) Apparatus: POIC Sphere Method Turbidimeter Type and Supplier: SEP-HS-30D; Nippon Precision Optical Instrument Co., Ltd.

Haze degree of the base material: 5.9 %

2) Unit: cm$^3$/m$^2$•day•bar ( cc/m$^2$•day•atm ) ( under 20°C, 65 % RH ) Apparatus: OX-TRAN 10/50A; made by MODERN CONTROLS ( The oxygen permeability of the composite structure was measured, and that of the polyvinyl chloride layer was subtracted from the former to give that of the EVOH coating layer only.)

3) in order to reinforce the EVOH coating layer, an EVOH film ( 30 $\mu$ ($\mu$m) thick ) was laminated onto the EVOH coating layer by using a polyurethane adhesive. Then the T-peel strength between the EVOH coating layer and the polyvinyl chloride base film was measured at an extension rate of 250 mm/min..

4) A plate ( 4 cm x 5 cm, 2 mm thick ) of non-plasticized hard polyvinyl chloride was put in close contact on the EVOH coating layer of the composite structure. A weight of 10 kg was put on the hard polyvinyl chloride plate and the amount of plasticizer migrated to the hard polyvinyl chloride at a temperature of 70°C after one week was measured.

## Example 5

Ten parts of a blend of a polyesteramide consisting of azelaic acid/ethylene glycol/piperazine in a molar ratio of 0.50/0.13/0.37 and in a ester component/amide component ratio of 26/74 ( Tg: -2.3°C ) with an EVOH containing 32 mol% of ethylene and having a saponification degree of 99.5 % in a blending ratio by weight of 15 : 85 was added to 90 parts of a mixed solvent of water 30 % and n-propyl alcohol 70 %, and the mixture was stirred for about 2 hours at a temperature of 70 to 80°C to give a transparent solution. The solution was cooled to 25°C, and thereafter applied onto a polyvinyl chloride film of 80 $\mu$ ($\mu$m) thickness containing 33 parts of dioctyl phthalate ( DOP ) as a plasticizer by the applicator coating method, followed by drying at 80°C for 5 minutes to form an EVOH coating film ( film thickness: 2$\mu$ ($\mu$m) ) containing about 1.5 % of volatile matter.

The measurement of the transparency of the above-obtained composite structure showed a Haze degree of 6.8 % and proved good transparency of the specimen.

The oxygen permeability at 20°C, 65 % RH of the composite structure was measured to give a value of 9.3 cm$^3$/m$^2$•day•bar ( cc/m$^2$•day•atm ) ( the EVOH layer only ).

Further the T-peel strength between the polyvinyl chloride and the EVOH coating film of the composite structure was measured to give 200 g/15 mm width ( 1961 mN/15 mm width ).

## Example 6

Ten parts of a blend of a polyesteramide consisting of sebacic acid/neopentyl glycol/piperazine in a molar ratio of 0.50/0.05/0.45 and in a ester component/amide component ratio of 10/90 ( Tg: 23.3°C ) with an EVOH containing 44 mol% of ethylene and having a saponification degree of 99.6 % in a blending ratio by weight of 10 : 90 was added to 90 parts of a mixed solvent of water 30 % and n-propyl alcohol 70 %, and the mixture was stirred for about 2 hours at a temperature of 70 to 80°C to give a transparent solution. The solution was cooled to 25°C, and thereafter applied onto a polyvinyl chloride film of 80 $\mu$ ($\mu$m) thickness containing 33 parts of dioctyl phthalate ( DOP ) as a plasticizer by the applicator coating method, followed by drying at 80°C for 5 minutes to form an EVOH coating film ( film thickness: 2$\mu$ ($\mu$m) ) containing about 1 .2 % of volatile matter.

The measurement of the transparency of the above-obtained composite structure showed a Haze degree of 5.6 % and proved good transparency of the specimen.

The oxygen permeability at 20°C, 65 % RH of the composite structure was measured to give a value of 18.2 cm$^3$/m$^2$·day·bar ( cc/m$^2$·day·atm ) ( the EVOH layer only ).

Further the T-peel strength between the polyvinyl chloride and the EVOH coating film of the composite structure was measured to give 60 g/15 mm width ( 588 mN/15 mm width )

Comparative Examples 1 and 2

The same experiments as in Examples 1 through 4 were repeated except that the blending ratios of the polyesteramide and the EVOH were 2 : 98 and 40 : 60 respectively. The properties of the thus obtained composite structures are also shown in Table 1.

In Comparative Example 1, though the Haze degree which represents the transparency and the oxygen permeability which relates to the gas barrier property were comparable with those of Examples 1 through 4, the T-peel strength which indicates the bond strength was far smaller than those of Examples 1 through 4 thus causing a problem in practical use.

In Comparative Example 2, while there was no problem in either of bond strength and transparency, the gas barrier property was found to show a marked decrease.

Example 7

Ten parts of a blend each of a polyesteramide consisting of azelaic acid/cycolhexanedimethanol/piperazine in a molar ratio of 0.50/0.09/0.41 and in a ester component/amide component ratio of 18/82 ( Tg: 20.5°C ) with an EVOH containing 32 mol% of ethylene and having a saponification degree of 99.5 % in a blending ratio by weight of 10 : 90 and 20 : 90 respectively was added separately to 90 parts of a mixed solvent of water 35 % and n-propyl alcohol 65 %, and the mixtures were separately stirred for about 2 hours at a temperature of 70 to 80°C to give two kinds of transparent solutions. The solutions were cooled to 25°C, and thereafter applied onto a film each of:
polystyrene film ( STYROFILM®, 50 $\mu$ ($\mu$m); ASAHI CHEMICAL ),
polycarbonate film ( EUPIRON® FILM, 100 $\mu$ ($\mu$m); MITSUBISHI GAS CHEMICAL ),
PMMA sheet ( KURALEX® SHEET, 1000 $\mu$ ($\mu$m) ; NITTO RESIN INDUSTRIES),
and
6-nylon film ( EMBLEM®, 15 $\mu$ ($\mu$m) ; UNITICA Corp. )
by the applicator coating method, followed by drying at 80°C for 10 minutes to form an EVOH coating film ( film thickness: 5 $\mu$ ($\mu$m) ) containing about 1.0 % of volatile matter.

The measurements for Haze degree and the oxygen permeability ( 20°C, 65% RH ) of the above-obtained composite structures showed Haze degrees as good as those in Table 1.

The 180°-peel strengths between base material and EVOH coating layer of the above composite structures are shown in Table 2.

EP 0 271 097 B1

Table 2

| Base Material | | 180°-Peel strengths (g/15mm)(mN/15mm)* | |
| --- | --- | --- | --- |
| Resin | Corona discharge*** | Blending ratio (wt%) 10 | 20 |
| Polystyrene | yes | 80 (785) | 180 (1765) |
| Polycarbonate | no | 230 (2256) | ** |
| | yes | 450 (4413) | ** |
| PMMA | no | 120 (1177) | 200 (1961) |
| 6-nylon | yes | 100 (981) | 180 (1765) |

*: In order to reinforce the EVOH coating layer, an EVOH film ( 30μ (μm) thick ) was laminated on the EVOH coating layer using a polyurethane adhesive. Then the 180°-peel strength between the EVOH coating layer and the base material was measured at an extension rate of 250mm/min.

**: not peelable

***: Corona discharge output: 1 kW, treated at 20 m/min.

## Claims

1. A laminated structure comprising a base layer of a resin selected from a polyvinyl chloride resin, polystyrene resin, polyacrylic resin, polycarbonate resin and polyamide resin; having provided at least on one surface thereof a layer of a blend of a polyesteramide composed of the reaction product of a diamine component a diol component and a dicarboxylic acid component having a Tg ( glass transition point ) of not higher than 50°C and a saponified product of ethylene vinyl acetate copolymer in a weight ratio between 5 : 95 to 35 : 65 wherein said saponified product comprises 20 to 60 mol% of ethylene and the saponification degree of the vinyl acetate component is not less than 90 %.

2. A laminated structure according to Claim 1, wherein said polyesteramide comprises a repeating unit from at least one diamine component having 2 to 14 carbon atoms and a repeating unit from at least one dicarboxylic acid component having 5 to 14 carbon atoms, said polyesteramide comprising ester component and amide component being present in a molar ratio of from 5 : 95 to 40 : 60.

3. A laminated structure according to Claim 1, wherein the film thickness of said layer of a blend of a polyesteramide and a saponified product of ethylene-vinyl acetate is 0.5 to 20 μ (μm).

4. A laminated structure according to Claim 1, wherein said polyvinyl chloride base material contains a plasticizer.

8

5. A laminated structure according to Claim 1, wherein said layer of a blend of the polyesteramide and the saponified ethylene-vinyl acetate copolymer is formed by coating a solution of said blend of the polyesteramide and the saponified ethylene-vinyl acetate copolymer, and thereafter drying said solution.

6. The use of the laminated structure according to claims 1 to 5 for preparing shaped articles, in particular sheets and films.

**Patentansprüche**

1. Mehrschichtstruktur, umfassend eine Grundschicht aus einem Harz, das aus einem Polyvinylchloridharz, Polystyrolharz, Polyacrylsäureharz, Polycarbonatharz und Polyamidharz ausgewählt ist; wobei auf mindestens einer der Oberflächen der Grundschicht eine Schicht aus einem Gemisch aus einem Polyesteramid, das aus dem Umsetzungsprodukt einer Diaminkomponente, einer Diolkomponente und einer Dicarbonsäurekomponente zusammengesetzt ist und ein Tg (Glasübergangspunkt) von nicht höher als 50°C aufweist, und einem verseiften Produkt eines Ethylenvinylacetat-Copolymers in einem Gewichtsverhältnis von 5:95 bis 35:65 aufgebracht ist, wobei das verseifte Produkt 20 bis 60 Mol-% Ethylen umfaßt und der Verseifungsgrad der Vinylacetatkomponente nicht kleiner als 90 % ist.

2. Mehrschichtstruktur nach Anspruch 1, wobei das Polyesteramid eine wiederkehrende Einheit aus wenigstens einer Diaminkomponente mit 2 bis 14 Kohlenstoffatomen und eine wiederkehrende Einheit aus wenigstens einer Dicarbonsäurekomponente mit 5 bis 14 Kohlenstoffatomen umfaßt, wobei die Polyesteramid umfassende Esterkomponente und die Amidkomponente in einem Molverhältnis von 5:95 bis 40:60 vorhanden sind.

3. Mehrschichtstruktur nach Anspruch 1, wobei die Filmdicke der Schicht des Gemisches aus Polyesteramid und verseiftem Produkt des Ethylenvinylacetats 0,5 bis 20 $\mu$ ($\mu$m) beträgt.

4. Mehrschichtstruktur nach Anspruch 1, wobei das Polyvinylchlorid-Grundmaterial einen Weichmacher enthält.

5. Mehrschichtstruktur nach Anspruch 1, wobei die Schicht des Gemisches aus dem Polyesteramid und dem verseiften Ethylenvinylacetat-Copolymer durch Auftragen einer Lösung des Gemisches aus Polyesteramid und verseiftem Ethylenvinylacetat-Copolymer und anschließend Trocknen der Lösung erzeugt wird.

6. Verwendung der Mehrschichtstruktur nach einem der Ansprüche 1 bis 5 zur Herstellung von Formteilen, insbesondere Folien und Filmen.

**Revendications**

1. Structure multicouches comprenant une couche de base d'une résine choisie parmi une résine de chlorure de polyvinyle, une résine de polystyrène, une résine polyacrylique, une résine de polycarbonate et une résine de polyamide ; comportant au moins sur une de ses surfaces une couche d'un mélange de polyesteramide constitué par le produit réactionnel d'un composant diamine, d'un composant diol et d'un composant d'acide dicarboxylique ayant un Tg (point de transition vitreuse) non supérieur à 50°C et un produit saponifié de copolymère d'éthylène-vinylacétate dans un rapport pondéral entre 5 : 95 jusqu'à 35 : 65 dans lequel le produit saponifié comprend 20 à 60 % molaire d'éthylène et le degré de saponification du composant vinylacétate n'est pas inférieur à 90 %.

2. Structure multicouches selon la revendication 1, dans laquelle le polyesteramide comprend un motif répétitif d'au moins un composant diamine ayant 2 à 14 atomes de carbone et un motif répétitif d'au moins un composant d'acide dicarboxylique ayant 5 à 14 atomes de carbone, le composant d'ester comprenant un polyesteramide et le composant amide étant présent dans un rapport molaire allant de 5 : 95 à 40 : 60.

3. Structure multicouches selon la revendication 1, dans laquelle l'épaisseur de pellicule de la couche d'un mélange de polyesteramide et d'un produit saponifié d'éthylène-vinylacétate est de 0,5 à 20 $\mu$

9

($\mu$m).

4. Structure multicouches selon la revendication 1, dans laquelle la matière à base de chlorure de polyvinyle contient un plastifiant.

5. Structure multicouches selon la revendication 1, dans laquelle la couche d'un mélange de polyesteramide et de copolymère éthylène-vinylacétate saponifié est formée en revêtant une solution du mélange de polyesteramide et du copolymère éthylène-vinylacétate saponifié puis en séchant cette solution.

6. Utilisation de la structure multicouches selon les revendications 1 à 5 pour préparer des articles mis en forme, notamment des feuilles et des pellicules.